Europäisches Patentamt

European Patent Office

Office européen des brevets

(11) Veröffentlichungsnummer: **0 299 190 B1**

(12) **EUROPÄISCHE PATENTSCHRIFT**

(45) Veröffentlichungstag der Patentschrift:
22.08.90

(21) Anmeldenummer: 88108860.3

(22) Anmeldetag: 03.06.88

(51) Int. Cl.⁵: **A01B 29/04, A01B 49/06**

(54) Bodenwalze.

(30) Priorität: 17.07.87 DE 3723664
05.05.88 DE 3815279

(43) Veröffentlichungstag der Anmeldung:
18.01.89 Patentblatt 89/3

(45) Bekanntmachung des Hinweises auf die Patenterteilung:
22.08.90 Patentblatt 90/34

(84) Benannte Vertragsstaaten:
BE DE FR GB IT NL

(56) Entgegenhaltungen:
EP-A- 0 100 013
EP-A- 0 223 134
EP-A- 0 245 648
DE-A- 1 605 629
DE-A- 2 263 369
DE-U- 8 710 527
US-A- 3 181 622
US-A- 4 383 566

(73) Patentinhaber: Amazonen-Werke H. Dreyer GmbH & Co.
KG, Am Amazonenwerk 9-13,
D-4507 Hasbergen-Gaste(DE)

(72) Erfinder: Gattermann, Bernd, Eichenwall 3,
D-2872 Hude 1(DE)
Erfinder: Siefken, Claus, Preussenweg 27,
D-2872 Hude 1(DE)

## Beschreibung

Die Erfindung betrifft eine Bodenwalze gemäß Oberbegriff des Patentanspruches 1.

Eine derartige Bodenwalze ist durch den Prospekt "AMAZONE DRILL-STAR die Reifenpacker-Drillmaschine" bekannt. Diese Bodenwalze hat sich bereits in der Praxis bewährt. Nun hat es sich jedoch bei dem praktischen Einsatz dieser Bodenwalze gezeigt, daß es auf steinigen Böden in einigen Fällen zu Beschädigungen an den starr ausgebildeten Stützkörpern, die innerhalb der Gummireifen angeordnet sind, kommen kann. Durch die Steine werden die Stützkörper teilweise verbogen und eingebeult.

Die Reifen sind gegeneinander über die Stützkörper und sich zwischen ihnen befindliche Distanzringe verspannt, so daß die Reifen gegen eindringende Erde, Staub und Feuchtigkeit abgedichtet sind. Hierdurch entsteht eine Abdichtung zwischen den Distanzringen, dem Gummi des Reifens und dem inneren Stützkörper. Die Reifen können sich somit nicht gegeneinander verdrehen. Es besteht ein relativ großer Unterschied zwischen dem Umfang der Lauffläche des Reifens und dem äußeren Umfang der Stützkörper. Da die Reifen über die Distanzringe und die Stützkörper und dem Traggerüst in ihrem inneren Bereich festgehalten werden, und sich die Lauffläche des Reifens beim Überrollen des Bodens auf den Stützkörpern abstützt, ergibt sich eine Verschiebung des Reifenumfanges gegenüber dem Abrollumfang. Diese Verschiebung ist nur in einem gewissen elastischen Bereich möglich. Wenn eine bestimmte Bodenkraft, die diese Verschiebung hervorruft überschritten wird, rutscht der Körper auf dem Stützkörper wieder in die ursprüngliche Position zurück. In der Praxis läßt sich das an einer leicht gewellten Fläche in den Reifenspuren erkennen, da die Stützkörper starr sind, können die Selbststützkörper auch nicht nachgeben.

Der Erfindung liegt die Aufgabe zugrunde, insbesondere Beschädigungen an den Stützkörpern durch Steine zu vermeiden.

Diese Aufgabe wird erfindungsgemäß durch das Merkmal des kennzeichnenden Teiles des Patentanspruches 1 gelöst. Infolge dieser Maßnahmen können die flexibel und elastisch ausgebildeten Stützkörper durch die praktisch punktuell auf die Stützkörper einwirkenden Steine die Stützkörper im elastischen Bereich verformen. Die Stützkörper selbst werden nicht beschädigt, sondern vielmehr wird die eingedrückte Stelle des Stützkörpers aufgrund der flexibel und elastisch ausgebildeten Stützkörper sich in seine Ursprungsposition wieder zurückformen. Des weiteren ergibt sich der überraschende Vorteil, daß durch die flexible und elastische Ausbildung der Stützkörper zumindest in ihrem äußeren Bereich die Stützkörper aufgrund ihrer flexiblen und elastischen Ausbildung sich zumindest teilweise verformen können, so daß sie teilweise zumindest die Umfangsdifferenz zwischen dem Reifenaußendurchmesser und dem Abrollumfang bzw. dem Umfang der Stützkörper ausgleichen können, so daß der Reifen nur noch wesentlich weniger auf dem Stützkörper rutschen muß, so daß sich eine wesentlich ebenere angedrückte Fläche durch die Gummireifen der Bodenwalze ergibt. Somit weisen die Stützkörper eine derartige Elastizität auf, die es ihnen ermöglicht, beispielsweise bei auf den Stützkörper einwirkenden Steinen, sich elastisch zu verformen, ohne daß es zu Beschädigungen an den Stützkörpern kommt. Zudem wirkt sich diese Ausbildung der Stützkörper als umlaufende glatte Ringe aus elastischem Material besonders vorteilhaft hinsichtlich der Verschleißerscheinungen im Reifeninneren aus, wie sie bei den bekannte, starren Stützkörpern vorkommen. Diese Verschleißerscheinungen lassen sich zudem noch durch entsprechende Schmierung im Reifeninneren reduzieren. Weiterhin zeichnen sich derartig ausgebildete Stützkörper durch leichte Montage und die Möglichkeiten der Materialersparnis aus. Die Gummireifen sind in bevorzugter Weise gebrauchte PKW-Reifen.

Damit die Bodenwalze seitenstabil läuft und nicht quer zur Fahrtrichtung hin und her seitliche Bewegungen ausführen kann, ist erfindungsgemäß vorgesehen, daß die Stützkörper im wesentlichen nur in und/oder entgegen der Drehrichtung der Bodenwalze flexibel und/oder elastisch sind. In sehr einfacher Weise erreicht man die vorgeschilderten Vorteile des Stützkörpers dadurch, daß die Stützkörper aus einem elastischen, vorzugsweise einem dauerelastischen Kunststoff gefertigt sind. Damit die Abstützelemente der Stützkörper in jedem Falle ein Rutschen des Reifens auf den Stützkörpern verhindern, ist erfindungsgemäß vorgesehen, daß die Abstützelemente der Stützkörper derart flexibel ausgebildet sind, daß sie die Relativbewegung zwischen dem Traggerüst und der Lauffläche des Reifens beim Abrollen auf der Bodenoberfläche ausgleichen können.

Eine sehr einfache Montagemöglichkeit für die Stützkörper auf dem Traggerüst und innerhalb der Gummireifen ergibt sich dadurch, daß die Stützkörper an einer Stelle geteilt und nach dem Einlegen in das Innere der Gummireifen an der Teilungsstelle mit Befestigungsmitteln, wie beispielsweise Schrauben oder Schnappverschlüssen, verbindbar sind.

Gemäß der Erfindung können die Stützkörper entweder einteilig ausgebildet sein oder aus einem Innenring bestehen, auf dem die etwa radial abstehenden Abstützelemente der Stützkörper befestigt sind. Bei einer anderen Ausführung der erfindungsgemäßen Stützkörper ist vorgesehen, daß die Stützkörper in ihrem inneren Bereich starr sind, und daß die Stützkörper auf ihrem äußeren Umfang mit einem elastischen Material versehen sind. Hierbei weist das elastische Material dann zumindest eine Dicke von 1 cm auf.

Durch die vorbeschriebene Ausbildung der Stützkörper wird somit gleichzeitig eine Beschädigung der Stützkörper durch Steine vermieden und des weiteren können durch die flexible und elastische Ausbildung der Stützkörper zumindest in ihrem äußeren Bereich die einen kleineren Durchmesser als die Reifen aufweisenden Abstützkörper, die sich aus dem Reifendurchmesserunterschied ergebene Relativbewegung zwischen Reifenlauffläche und Stützkörper beim Abrollen auf der Bodenoberfläche in äußerst vorteilhafter Weise ausgleichen. Des weiteren wird hierdurch erreicht, daß ein Verschleiß innerhalb der Gummireifen, der an sich durch die einen kleineren Durchmesser als die Lauffläche des Reifens aufweisenden Abstützelemente aufgrund der Relativbewegung hervorrufen würde, praktisch überhaupt nicht mehr auftreten kann.

Gemäß der Erfindung sind in jedem Reifen zwei separate Abstützringe in einem Abstand zueinander angeordnet, daß zwischen den beiden Abstützringen ein Abstandsring in der Nähe des Traggerüstes angeordnet ist, der Abstandsring zumindest etwa den gleichen Durchmesser wie die zwischen den einzelnen Reifen angeordneten Distanzringe aufweist.

Weiterhin ist erfindungsgemäß vorgesehen, daß die Stützkörper auf ihrer dem Traggerüst zugewandten Seite als Verbreiterungen ausgebildete Ringansätze aufweisen, daß die Verbreiterungen der Stützkörper unter die Reifenwulste oder Rundungen der Reifenwulste und unter die Abstandsringe fassen, wobei die Verbreiterungen der Stützkörper auf ihrer Innenseite umlaufende Abschrägungen aufweisen. Durch diese erfindungsgemäßen Maßnahmen wird für eine exakte Befestigung der sich in den Reifen befindlichen Stützkörper gesorgt.

Diese besonders günstige Ausbildung der Stützkörper berücksichtigt erfindungsgemäß, daß die Stützkörper aus einem flexiblen und verschleißfestem Material bestehen oder zumindest auf ihrer äußeren, den Gummireifen zugewandten Stützflächen mit einem derartigen Material beschichtet sind.

Weitere Einzelheiten der Erfindung sind den übrigen Unteransprüchen, der Beispielsbeschreibung und den Zeichnungen zu entnehmen. Hierbei zeigen

Fig. 1 eine Gerätekombination mit einer erfindungsgemäßen Bodenwalze in der Seitenansicht,

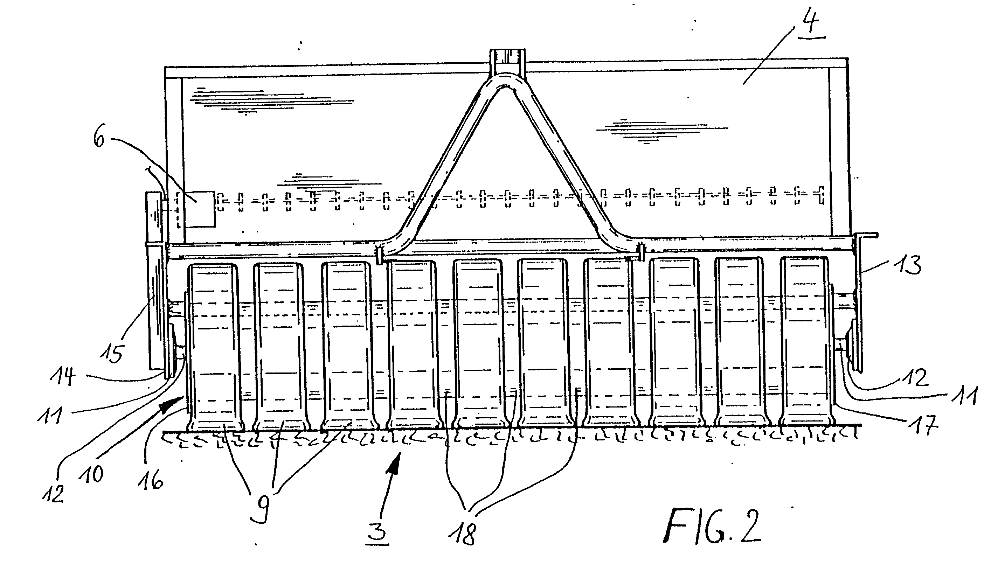

Fig. 2 die Bodenwalze in der Ansicht II–II mit aufgebauter Sämaschine,
Fig. 3 die Anordnung der Gummireifen mit innerhalb der Gummireifen angeordneten und andersartig ausgebildeten Stützkörper einer erfindungsgemäßen Bodenwalze im Schnitt und in Teilansicht und
Fig. 4 der erfindungsgemäße Stützkörper gemäß Fig. 3 in der Seitenansicht.

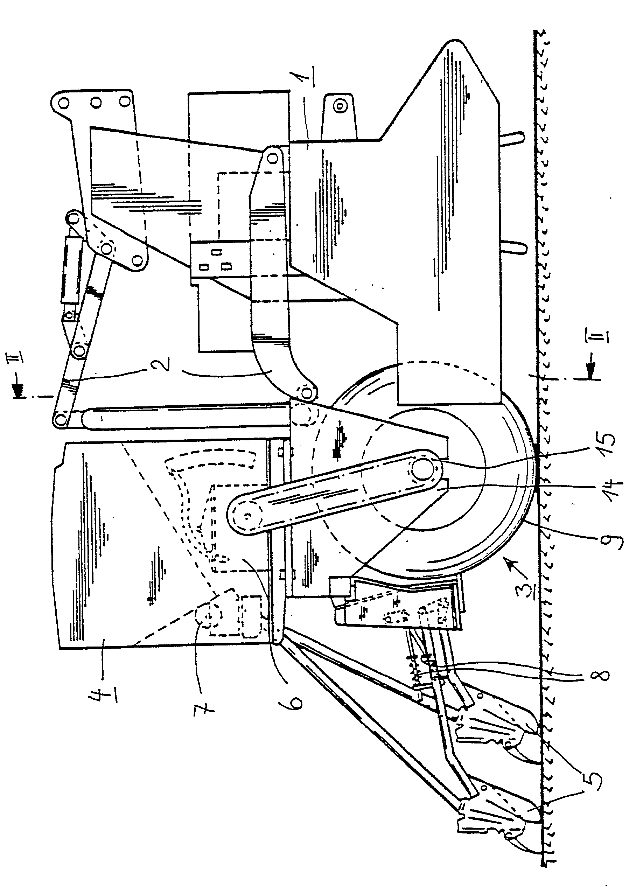

Die Fig. 1 zeigt eine landwirtschaftliche Gerätekombination, die aus der schleppergetriebenen Bodenbearbeitungsmaschine 1 und der hinter der Bodenbearbeitungsmaschine 1 über das Dreipunktgestänge 2 angeordnete Bodenwalze 3 mit der aufgesattelten Drillmaschine 4 besteht. Die Bodenwalze 3 ist somit als Nachlaufwalze hinter der Bodenbearbeitungsmaschine 2 und gleichzeitig als Fahrwerk für die Drillmaschine 4 ausgebildet. Die Bodenwalze 3 bestimmt die Eingriffstiefe der Bodenbearbeitungswerkzeuge der Bodenbearbeitungsmaschine 1. Die Drillmaschine 4 weist die Säschare 5 auf, die in zwei hintereinanderliegenden Querreihen angeordnet sind. Von der Bodenwalze 3 aus werden über den regelbaren Antrieb 6 die Dosierorgane 7 der Drillmaschine 4 angetrieben. Die Säschare 5 werden durch die Schardruckfedern 8 gegen den Boden gedrückt.

Die Bodenwalze 3 besteht aus den nebeneinander angeordneten Gummireifen 9, die auf dem drehbar gelagerten Traggerüst 10 angeordnet sind. Das Traggerüst 10 ist als Tragrohr ausgebildet, welches über die Lager 11 und die Lagerzapfen 12 an den seitlichen Tragarmen 13 und 14 drehbar angeordnet ist, wobei der Tragarm 14 als Lagergehäuse für den Antrieb 15 des Regelgetriebes 6 ausgebildet ist.

Auf dem durchgehenden Tragrohr 10 sind die Gummireifen 9 nebeneinander angeordnet. Das Tragrohr 10 weist einen Außendurchmesser auf, der in etwa dem Innendurchmesser der Gummireifen 9 entspricht. Somit sind also die Gummireifen 9 sehr einfach auf das Tragrohr 10 von der einen Seite her aufzuschieben. An der einen Seite des Tragrohres 10 ist ein Stirnring 16 mittels einer als Spannvorrichtung ausgebildeten Schraube angeordnet. Auf der anderen Seite des Tragrohres 10 ist eine Stirnwand 17 an der Stirnfläche des Tragrohres angeschweißt. Der Außendurchmesser der Stirnwände ist größer als der Außendurchmesser des Tragrohres 10, so daß der überstehende Ring jeder Stirnwand 16 und 17 als Anlagefläche für den Wulst der Reifen 9 dient. Zwischen den Gummireifen 9 sind jeweils die als Ringe ausgebildeten Abstandshalter 18 angeordnet, die einen etwas größeren Innendurchmesser als das Tragrohr 10 aufweisen. Dadurch, daß durch die beiden äußeren Stirnwände 16 und 17 die Gummireifen 9 gegeneinander bzw. gegen die Ringe 18 gedrückt werden, wird sichergestellt, daß kein Erdreich in das Innere der Gummireifen 9 eindringen kann, da der Innenraum der Gummireifen 9 durch das Gegeneinanderpressen abgedichtet wird. Des weiteren können die Gummireifen 9 sich also nicht gegenüber dem Tragrohr 10 verdrehen bzw. die einzelnen Gummireifen 9 sich nicht gegeneinander verdrehen.

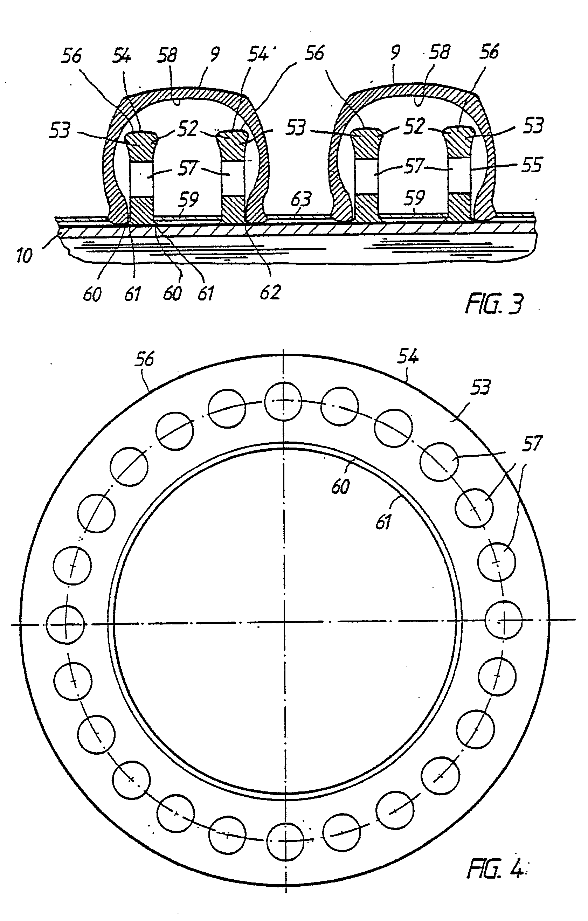

Die Fig. 3 zeigt die Anordnung der Stützkörper 52 im Inneren der Gummireifen 9. In jedem Gummireifen 9 sind in einem Abstand zueinander zwei Abstandsringe 53 angeordnet, die jeweils einen Stützkörper 52 innerhalb eines Gummireifens 9 bilden. Die Abstützringe 53 sind als umlaufende glatte Ringe 54 ausgebildet und aus elastischem Material hergestellt und weisen in ihrer Wandung 55 in einem Abstand zur äußeren umlaufenden Abstützfläche 56 die Durchbrüche 57 auf. Die Abstützringe 53 weisen einen Außendurchmesser auf, der kleiner ist als der Innendurchmesser der Lauffläche 58 der Gummireifen 9. Die beiden Abstützringe 53 werden durch den Abstandsring 59 auf Abstand zueinander gehalten, wobei der jeweilige Abstandsring 59 mit den als Verbreiterungen 30 ausgebildeten umlaufenden Ringansätzen 61 der Abstützringe 53 zusammenwirkt, während die anderen Ringansätze 61 der Abstützringe 53 unter die Reifenwulste 62 fassen. Zwischen den Gummireifen 9 sind jeweils die als Ringe ausgebildeten Abstandshalter 63 angeordnet, die einen etwas größeren Innendurchmesser als das Tragrohr 10 aufweisen. Die Abstandsringe 63 weisen den gleichen Durchmesser wie die Abstandsringe 59 auf.

Die Funktionsweise der erfindungsgemäßen Stützkörper, die aus einem elastischen Material hergestellt sind bzw. auf ihrem äußeren und der Lauffläche des Gummireifens 9 zugewandten Seite flexibel und/oder elastisch ausgebildet sind, ist folgende:

Durch die vorlaufende Bodenbearbeitungsmaschine 1 wird der Boden aufgelockert und gekrümelt. Die nachfolgende Bodenwalze 3 verdichtet den Boden in streifenförmig Bereichen in unterschiedlicher Weise stark. Im Bereich der Abstützringe ergeben sich stark verfestigte Befestigungsbereiche. Durch die Abstützringe wird der Boden über die Gummireifen 9 derart stark verdichtet, daß die hier abgelegten Samenkörper optimale Keim- und Wachstumsbedingungen bereits in den ersten Wochen vor dem vollkommenden Absetzen des Bodens aufgrund des natürlichen Absetzvorganges findet. In dem mittleren Bereich der Gummireifen 9, der sich zwischen die außen angeordneten Abstützringe legen kann, wird der Boden weniger stark verfestigt. In den Bereichen zwischen den Gummireifen wird der Boden ebenfalls relativ wenig bzw. nur sehr gering verfestigt. Nach dem Abrollen der Lauffläche des Gummireifens 9 auf dem Boden wird dieser mittlere, sich beim Abrollen auf der Bodenoberfläche in den Zwischenraum zwischen den Abstützringen hineindrückende Bereich aufgrund der Elastizität des Gummireifens wieder nach außen drücken. Diese Bewegung der Laufflächen der Gummireifen 9 wird als walken bezeichnet. Durch dieses derartig starke Walken der Laufflächen der Gummireifen 9 ergibt sich in vorteilhafter Weise eine Selbstreinigung der Laufflächen der Gummireifen 9. Wenn die Gerätekombination mit der Bodenwalze, wobei in dem Inneren der Gummireifen 9 der Bodenwalze 3 die elastisch und flexibel zumindest in ihrem äußeren Bereich ausgebildete Abstützringe angeordnet sind, auf steinigen Böden eingesetzt werden, so können sich zumindest die äußeren Bereiche der Abstützringe elastisch eindrücken und nach dem Abrollen auf der Bodenoberfläche formt sich dieser eingedrückte Teil des Abstützringes wieder zurück. Darüber hinaus sind die Abstützelemente derart flexibel ausgebildet, daß sie die Relativbewegung zwischen dem Traggerüst bzw. Stützkörper und der Lauffläche des Reifens, beim Abrollen auf der Bodenoberfläche ausgleichen, so daß die Lauffläche des Reifens nicht mehr auf den Stützkörpern rutscht, wie dies bei in sich vollkommen starren Stützkörpern der Fall wäre.

Somit kann es auch keine Verformung der Stützkörper durch Steine mehr geben, da die Stützkörper elastisch ausgebildet sind.

Des weiteren ist die aus einem dauerelastischen Kunststoffmaterial, wie beispielsweise PVC hergestellten Abstützringe in einfacher Weise in die Reifen einzusetzen. Hierbei ist diese Abstützung in vorteilhafter Weise so ausgebildet, falls einmal die Reifen verschlissen sein sollten, daß sich diese Abstützung immer wieder verwenden läßt und vom Landwirt selbst in Ersatzreifen eingebaut werden kann.

## Patentansprüche

1. Bodenwalze, insbesondere Nachlaufwalze hinter einer Bodenbearbeitungsmaschine und/oder Fahrwerk einer Drillmaschine, mit nebeneinander auf einem Traggerüst drehbar angeordneten Gummireifen, wobei im Inneren der Gummireifen zwischen dem Traggerüst und dem Bereich der Lauffläche des Reifens ein oder mehrere Stützkörper zum Abstützen der Lauffläche angeordnet sind, dadurch gekennzeichnet, daß die Stützkörper (52) zumindest auf ihrer äußeren und der Lauffläche (58) des Gummireifens (9) zugewandten Seite flexibel und/oder elastisch ausgebildet sind, daß die Stützkörper (52) aus elastischem Material hergestellt sind, daß in der Wandung (55) der Stützkörper (52) in einem Abstand zur äußeren umlaufenden Abstützfläche Durchbrüche (57) in dem Stützkörper (52) angeordnet sind und daß die elastischen Stützkörper (52) als umlaufende glatte Ringe (54) ausgebildet sind.

2. Bodenwalze nach Anspruch 1, dadurch gekennzeichnet, daß die Stützkörper in ihrem inneren Bereich starr sind, und daß die Stützkörper auf ihrem äußeren Umfang mit einem elastischen Material versehen sind.

3. Bodenwalze nach Anspruch 2, dadurch gekennzeichnet, daß die Stützkörper zumindest mit einem etwa 1 cm dicken elastischen Material beschichtet sind.

4, Bodenwalze nach Anspruch 1, daß die Stützkörper (52) auf ihrer dem Traggerüst (10) zugewandten Seite als Verbreiterungen (60) ausgebildete umlaufende Ringansätze (61) aufweisen.

5. Bodenwalze nach Anspruch 1 und/oder 4, dadurch gekennzeichnet, daß in jedem Reifen (9) die Stützkörper aus Abstützringen (53) bestehen, die in einem Abstand zueinander angeordnet sind, daß zwischen den beiden Abstützringen (53) ein Abstandsring (59) in der Nähe des Traggerüstes (10) ist und daß der Abstandsring (59) zumindest etwa den gleichen Durchmesser wie die zwischen den einzelnen Reifen (9) angeordneten Distanzringe (63) aufweist.

6. Bodenwalze nach Anspruch 1 und/oder 4, dadurch gekennzeichnet, daß die Verbreiterungen (60) der Abstützringe (53) unter die Reifenwulste (62) oder Rundungen der Reifenwulste passen.

7. Bodenwalze nach Anspruch 1, 4 und/oder 5, dadurch gekennzeichnet, daß die Verbreiterungen (60) der Abstützringe (53) unter die Abstandsringe (59) fassen.

8. Bodenwalze nach Anspruch 1, 4, 5, 6 und/oder 7, dadurch gekennzeichnet, daß die Verbreiterungen (60), der Abstützringe (53) auf ihrer Innenseite umlaufende Abschrägungen aufweisen.

9. Bodenwalze nach einem oder mehreren der vorhergehenden Ansprüche, dadurch gekennzeichnet, daß die Stützkörper (52) aus einem flexiblen und verschleißfestem Material bestehen oder zumindest auf ihrer äußeren, den Gummireifen (9) zugewandten Stützflächen (56) mit einem derartigen Material beschichtet sind.

## Claims

1. Ground roller, more especially a follower roller behind a ground cultivating machine and/or travelling means of a seed drill, including rubber tyres which are rotatably disposed adjacent one another on a supporting frame, one or a plurality of supporting bodies for supporting the tread surface being disposed in the interior of the rubber tyres between the supporting frame and the region of the tread surface of the tyre, characterised in that the supporting bodies (52) are adapted to be flexible and/or resilient on at least their outer end facing the tread surface (58) of the rubber tyre (9), in that the supporting bodies (52) are formed from resilient material, in that openings (57) in the suporting body (52) are disposed in the wall (55) of the supporting bodies (52) at a distance from the outer circumferential supporting face, and in that the resilient supporting bodies (52) are formed as circumferential, smooth rings (54).

2. Ground roller according to claim 1, characterised in that the supporting bodies are rigid in their internal region, and in that the supporting bodies are provided with a resilient material on their outer circumference.

3. Ground roller according to claim 2, characterised in that the supporting bodies are at least coated with a resilient material which is approximately 1 cm thick.

4. Ground roller according to claim 1, characterised in that the supporting bodies (52) are provided with circumferential, annular shoulders (61), which are formed as widened portions (60), on their side facing the supporting frame (10).

5. Ground roller according to claims 1 and/or 4, characterised in that the supporting bodies in each tyre (9) comprise supporting rings (53), which are spaced from one another, in that a spacer ring (59) is disposed between the two supporting rings (53) in the vicinity of the supporting frame (10), and in that the spacer ring (59) has at least substantially the same diameter as the spacer rings (63), which are disposed between the individual tyres (9).

6. Ground roller according to claims 1 and/or 4, characterised in that the widened portions (60) of the supporting rings (53) fit underneath the tyre beads (62) or rounded portions of the tyre beads.

7. Ground roller according to claims 1, 4 and/or 5, characterised in that the widened portions (60) of the supporting rings (53) engage beneath the spacer rings (59).

8. Ground roller according to claims 1, 4, 5, 6 and/or 7, characterised in that the widened portions (60) of the supporting rings (53) are provided with circumferential inclinations on their inside.

9. Ground roller according to one or more of the preceding claims, characterised in that the supporting bodies (52) are formed from a flexible and wear-resistant material or are at least coated with such a material on their outer supporting faces (56) facing the rubber tyres (9).

## Revendications

1. Rouleau-compacteur notamment rouleau traîné derrière une machine pour travailler le sol et/ou le châssis de roulement d'un semoir, comportant de manière juxtaposée sur une ossature portante des pneumatiques montés à rotation, l'intérieur des pneumatiques entre l'ossature portante et la zone de la surface de roulement du pneumatique comportant un ou plusieurs organes d'appui pour soutenir la surface de roulement, caractérisé en ce que, au moins sur leur côté extérieur en regard de la surface de roulement (58) du pneumatique, les organes d'appui (52) sont réalisés de manière flexible et/ou élastique, les organes d'appui (52) étant réalisés en un matériau élastique, et dans la paroi (55) de l'organe d'appui (52) à une certaine distance de la surface d'appui périphérique extérieure, il y a des passages (57) réalisés dans l'organe d'appui (52) et les organes d'appui élastiques (52) sont en forme d'anneaux (54) périphériques, lisses.

2. Rouleau-compacteur selon la revendication 1, caractérisé en ce que les organes d'appui sont rigides dans leur zone intérieure et en ce que les organes d'appui comportent une matière élastique sur toute leur périphérie extérieure.

3. Rouleau-compacteur selon la revendication 2, caractérisé en ce que les organes d'appui sont revêtus d'au moins par un matériau élastique d'une épaisseur d'environ 1 cm.

4. Rouleau-compacteur selon la revendication 1, caractérisé en ce que les organes d'appui présentent sur leur côté en regard de l'ossature portante (10), les parties élargies (60) formant des épaulements annulaires périphériques (61).

5. Rouleau-compacteur selon la revendication 1 et/ou 4, caractérisé en ce que dans chaque pneumatique (9), les organes d'appui sont formés d'anneaux d'appui (53) disposés à un certain intervalle l'un de l'autre, et entre les deux anneaux d'appui (53), on a un anneau d'appui (59) au voisinage de l'ossature portante (10) et en ce que l'anneau d'écartement (59) a au moins sensiblement le même diamètre que l'anneau d'intervalle (63) prévu entre les différents pneumatiques (9).

6. Rouleau-compacteur selon la revendication 1 et/ou 4, caractérisé en ce que les parties élargies (60) des anneaux d'appui (53) viennent sous les talons (62) des pneumatiques ou sous les arrondis des talons des pneumatiques.

7. Rouleau-compacteur selon la revendication 1, 4 et/ou 5, caractérisé en ce que les parties élargies (60) des anneaux d'appui (53) viennent prendre sous les anneaux d'écartement (59).

8. Rouleau-compacteur selon la revendication 1, 4, 5, 6 et/ou 7, caractérisé en ce que les parties élargies (60) des anneaux d'écartement (53) présentent sur leur côté intérieur, les surfaces inclinées périphériques.

9. Rouleau-compacteur selon l'une ou plusieurs des revendications précédentes, caractérisé en ce que les organes d'appui (52) sont réalisés en un matériau souple et résistant à l'usure ou sont au moins revêtus au niveau de leur surface d'appui (56) tournée vers les pneumatiques (9), d'un tel matériau.

FIG.2

FIG. 3

FIG. 4